# EUROPEAN PATENT APPLICATION

(11) **EP 2 116 416 A1**
(43) Date of publication of application: **11.11.2009**
(21) Application number: 08718470.1
(22) Date of filing: 15.02.2008
(51) Int. Cl.: B60N 2/48

(54) **HEADREST FOR MOTOR VEHICLE SEAT**

(30) Priority: 16.02.2007 ES 200700441
(71) Applicant: Batz, S.Coop., 48140 Igorre (Bizkaia) (ES)
(72) Inventor: INTXAURBE IRIONDO, Jatsu, E-48142 Artea (Bizkaia) (ES); CUADRADO GONZÁLEZ, Alberto, E-48902 Baracaldo (Bizkaia) (ES)
(74) Representative: Igartua, Ismael
(86) International application number: PCT/ES2008/070023
(87) International publication number: WO 2008/099044

(57) **Abstract**

Headrest for motor vehicle seats, comprising a fixed part (2), a moving part (3) movable from a rest position to an active position, at least one prestressed spring (4) for moving the moving part (3), retention means for keeping the moving part (3) in the rest position and which comprise a retention cam (5), and release means that act on said retention cam (5) in the event of a collision. One end (8) of the cam (5) is connected to the fixed part (2), and the other end (9) is coupled to the moving part (3) in the rest position.

## Description

### TECHNICAL FIELD

This invention refers to a headrest for motor vehicles seats.

### PRIOR ART

There are know headrests that comprise two parts, one fixed part and one moving part, the moving part being movable in the event of the vehicle being hit from behind, from a rest position, in which the moving part is attached to the fixed part, to an active position. In said active position, the moving part becomes separated from the fixed part and moves towards the occupant of the seat, thereby reducing the distance the head of the occupant travels before finding support on the head rest, and thereby reducing the risk of said occupant suffering whiplash.

US 6,688,697 B2 describes a headrest in which a prestressed spiral spring is used to move the moving part in relation to the fixed part. The fixed part and the moving part are connected together by two upper arms and two lower arms that are parallel to each other. The headrest comprises retention means to keep the moving part in its rest position, and release means to release said retention means in the event of impact, causing the prestressed spring to act. The retention means comprise a retention cam, disposed pivotally in relation to the fixed part, which holds, as a result of the action of a torsion spring, a crossrod connected on both sides to respective spring cams, one end of the prestressed spring being connected to the fixed part and the other end of the prestressed spring being connected to said spring cams. The release means comprise an electromagnet, with the result that when power is supplied to the coil of said electromagnet, the drive axle of said electromagnet acts on the retention cam, thereby releasing the crossrod of said retention cam and moving the spring cams as a result of the action of the prestressed spring.

As the spring cams are connected to the lower arms, the movement of the spring cams also causes the lower arms to move, the movement of the lower arms being transmitted to the upper arms by respective connection cams, thereby moving the moving part in relation to the fixed part.

### DISCLOSURE OF THE INVENTION

It is an object of the invention to provide a headrest of the type that comprises a moving part that is movable in the event of impact and in which the number of parts used is reduced, thus creating a simplified solution.

The headrest of the invention comprises a fixed part, a moving part that is movable in relation to said fixed part from a rest position to an active position, at least one prestressed spring for moving the moving part in relation to the fixed part, and retention means for keeping the moving part in the rest position.

The retention means comprise a retention cam disposed pivotally in relation to the fixed part. The headrest of the invention also comprises release means that act on said retention cam in the event of a collision, thereby releasing the retention means.

One of the ends of the retention cam is connected to the fixed part or to some of the parts fixed to said fixed part, and the other end is coupled to the moving part when the headrest is in the rest position.

As the retention cam on the headrest of the invention is connected directly to the moving part, the number of parts used is reduced, thereby simplifying the headrest mechanism. This direct connection between the retention cam and the moving part also reduces the response time.

These and other advantages and characteristics of the invention will be made evident in the light of the drawings and the detailed description thereof.

### DESCRIPTION OF THE DRAWINGS

Figure 1 shows a perspective view of a first embodiment of the invention in the rest position.
Figure 2 shows a perspective view of the embodiment of Figure 1 in the active position.
Figure 3 shows a cross-sectional view of the embodiment of Figure 1 in the rest position.
Figure 4 shows a cross-sectional view of the embodiment of Figure 1 in the active position.
Figure 5 shows a partial cross-sectional view of the embodiment of Figure 1 at the point at which the release means release the retention means.
Figure 6 shows a perspective view of the retention means and the release means of the embodiment of Figure 1, with the headrest in the active position.
Figure 7 shows a partial perspective view of the embodiment of Figure 1 in which the moving part has been removed.
Figure 8 shows a perspective view of a second embodiment of the invention in the active position.
Figure 9 shows a first partial perspective view of the embodiment of Figure 8 in the active position.
Figure 10 shows a second partial perspective view of the embodiment of Figure 8 in the active position.
Figure 11 shows a partial cross-sectional view of the embodiment of Figure 8 in the active position.
Figure 12 shows a partial cross-sectional view of the embodiment of Figure 8 with the reset rod inserted in the headrest.

### DETAILED DISCLOSURE OF THE INVENTION

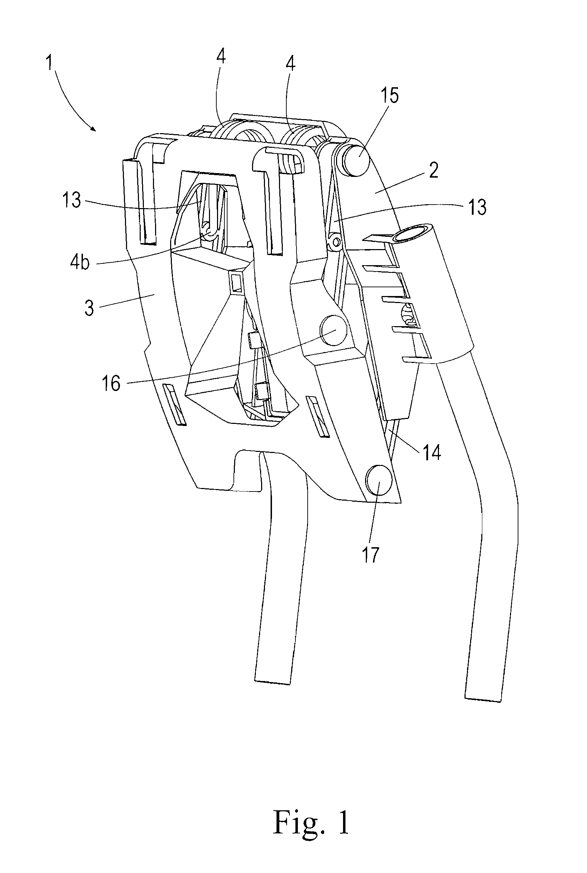

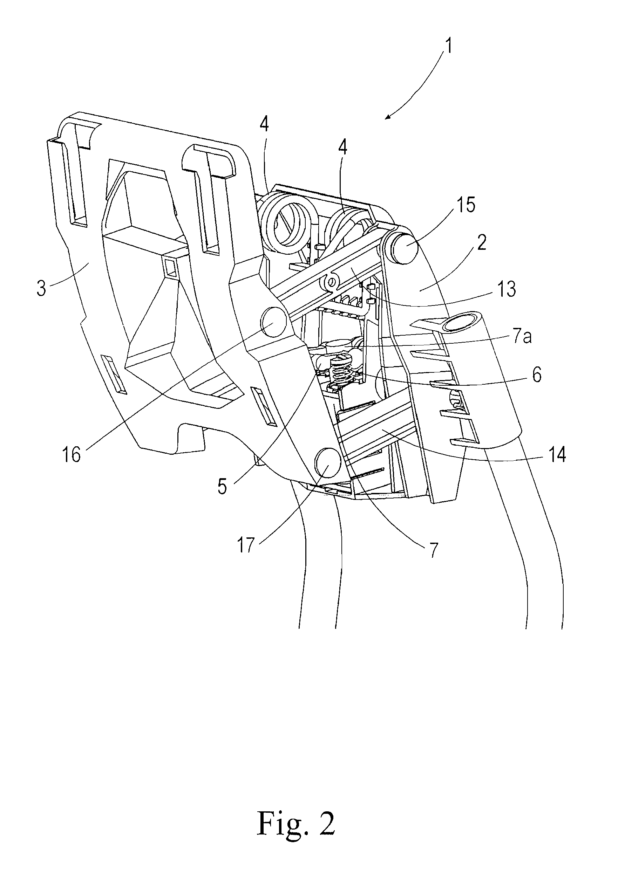

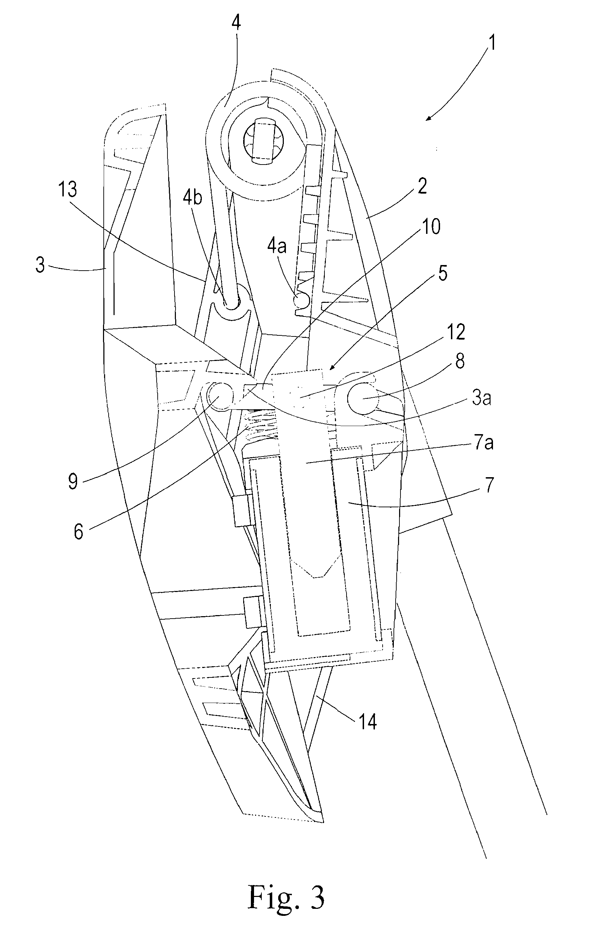

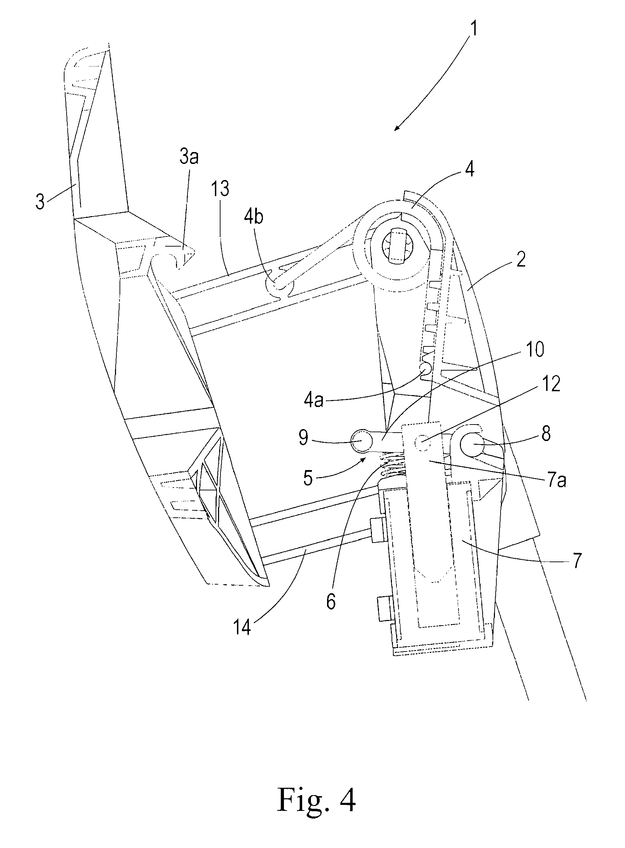

As can be seen in the first embodiment, shown in Figures 1 to 7, the headrest 1 of the invention comprises a fixed part 2 and a moving part 3 movable in relation to said fixed part 2 from a rest position (shown in Figures 1 and 3) to an active position (shown in Figures 2 and 4). In this first embodiment, the headrest 1 comprises two upper arms 13 and two lower arms 14 that connect said fixed part 2 and said moving part 3 together, although embodiments in which the lower arms 14 and even the upper arms 13 are removed are possible. The upper arms 13 are connected, while also offering the possibility of rotation, to the fixed part 2 and the moving part 3 by means of respective connection points 15 and 16. Similarly, the lower arms 14 are connected to the fixed part 2 by means of a point of connection not visible in the figures and to the moving part 3 by means of a point of connection 17.

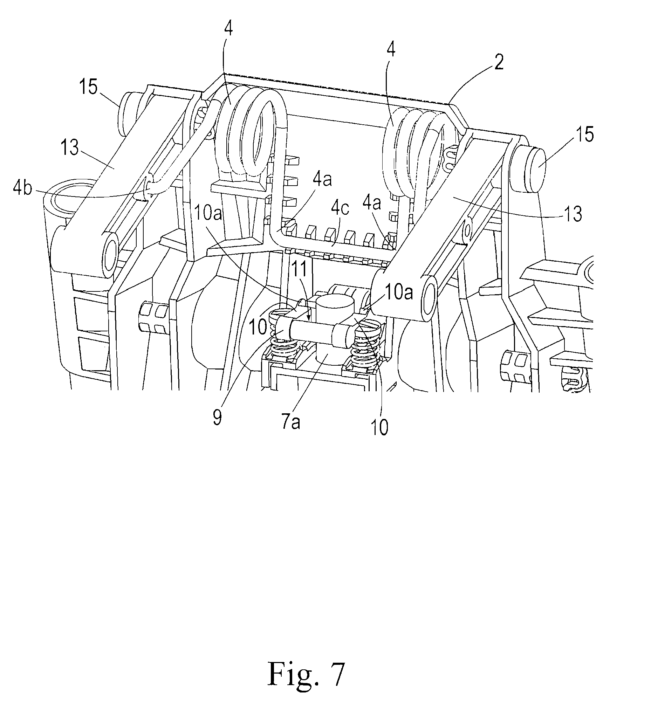

The movement of the moving part 3 from the rest position to the active position is effected by a prestressed spring 4. In the event that there is only a single upper arm 13, the headrest 1 would comprise a single prestressed spring 4, with one of its ends 4a being connected to the fixed part 2 and the other end 4b connected to said upper arm 13. In the event that there are two upper arms 13, as in this first embodiment, the headrest 1 must comprise a prestressed spring 4 for each upper arm 13, one end 4a of each prestressed spring 4 being connected to the fixed part 2 and the other end 4b being connected to the respective upper arm 13. As can be seen in Figure 7, in this first embodiment the two prestressed springs 4 form a single spring with a central section 4c that is connected to the fixed part 2.

The path of the moving part 3 in relation to the fixed part 2 is determined by the shape of the upper arms 13 and the lower arms 14. In this first embodiment, in order to achieve the required path, it is necessary that the upper arms 13 and the lower arms 14 are not parallel to each other. As a result, as can be seen in Figure 4, the upper arms 13 are inclined at a greater angle than the lower arms 14.

The headrest 1 of the invention also comprises retention means to keep the moving part 3 in the rest position. Said retention means comprise a retention cam 5 disposed pivotally in relation to the fixed part 2 and retention springs 6 that act on said retention cam 5. Embodiments of the invention in which said retention springs 5 are removed are possible, although retention springs 5 or equivalent means are necessary if the intention is to allow the headrest 1 to be reset manually in a simple way. The headrest 1 also comprises release means connected to the fixed part 2 and which act on said retention cam 5 in the event of a collision, counteracting the force of the retention springs 6 and releasing the retention means.

In order to dispose the retention cam 5 pivotally in relation to the fixed part 2, one end of said retention cam 5 must be attached to the fixed part 2 or to one of the parts attached to said fixed part 2. In the embodiment shown in Figures 1 to 7, one end of the retention cam 5 comprises a transverse pivot axle 8 connected to the fixed part 2 by means of a projection 2a disposed on said fixed part 2, and the other end of said retention cam 5 comprises a transverse retention axle 9 that is housed, when the headrest 1 is in the rest position, in a hook 3a disposed on the moving part 3, as shown in Figure 3. Preferably, said retention axle 9 comprises a cylindrical bushing that rotates in relation to its own axis, thereby helping the retention axle 9 to come free from the hook 3a in the event of a collision. Said hook 3a may be built into the rest of the moving part 3 or it may be attached to the moving part 3.

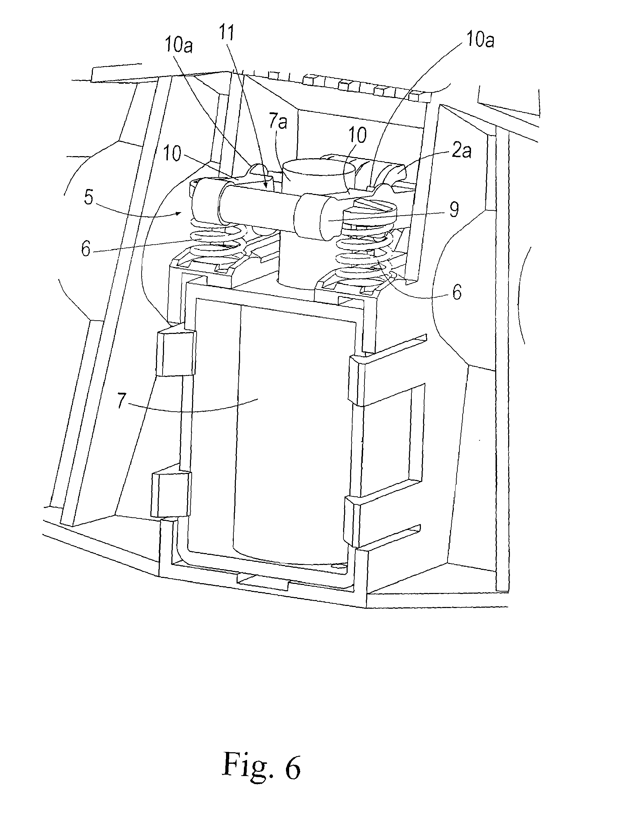

In this embodiment, as can be seen in Figure 6, the headrest 1 comprises two retention springs 6 that press on the retention cam 5, keeping said retention cam 5 in the position shown in Figure 3.

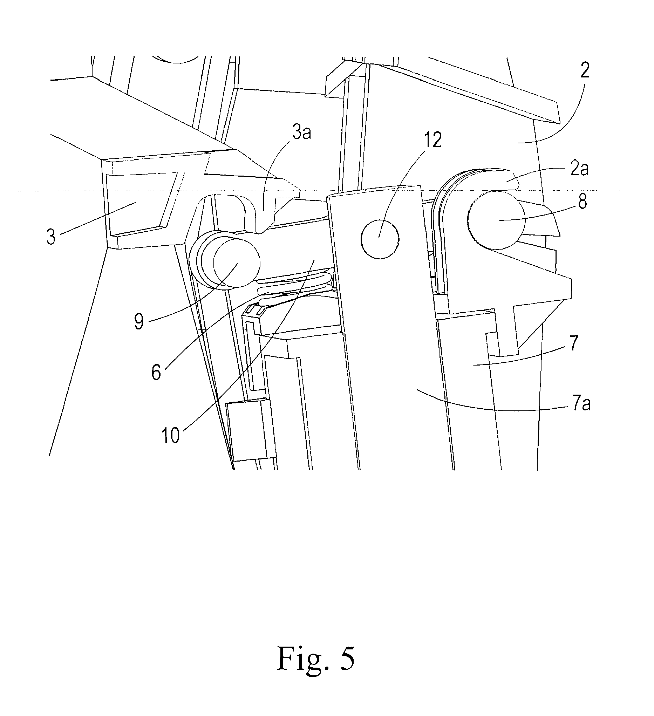

The headrest 1 also comprises release means to release the retention means in the event of a collision. Said release means comprise an electromagnet 7 that comprises a drive axle 7a connected to the retention cam 5. In the event of a collision, power is supplied to the coil of the electromagnet 7 and the drive axle 7a of said electromagnet 7 moves, as shown in Figure 5. As a result, said drive axle 7a causes the retention cam 5 to pivot, thereby counteracting the force exerted by the retention springs 6 and freeing the retention axle 9 from the hook 3a.

As shown in Figures 6 and 7, the retention cam 5 comprises two side sections 10 that connect the pivot axle 8 and the retention axle 9. Said side sections 10, said pivot axle 8 and said retention axle 9 delimit a housing 11 into which is inserted the drive axle 7a of the electromagnet 7, said drive axle 7a being fixed to the side sections 10 by means of a transverse connection axle 12.

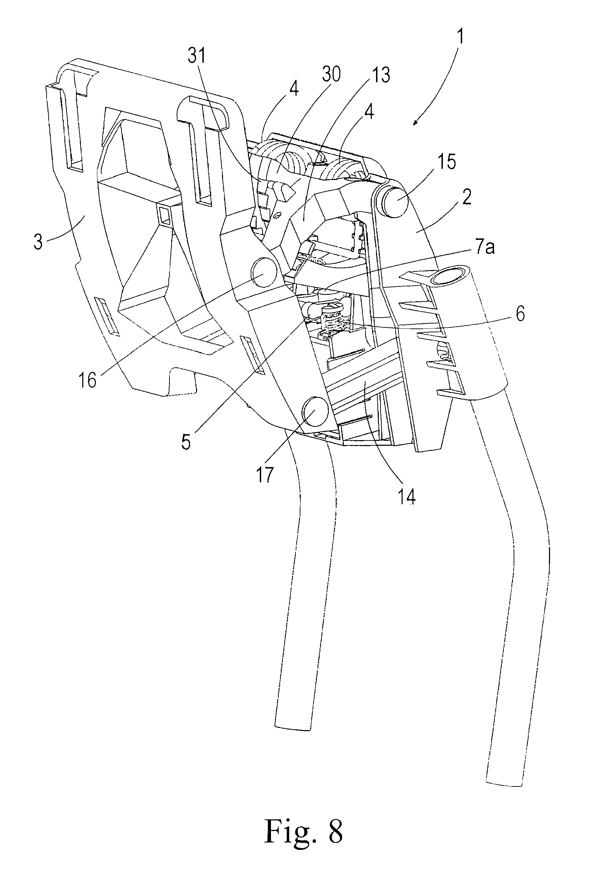

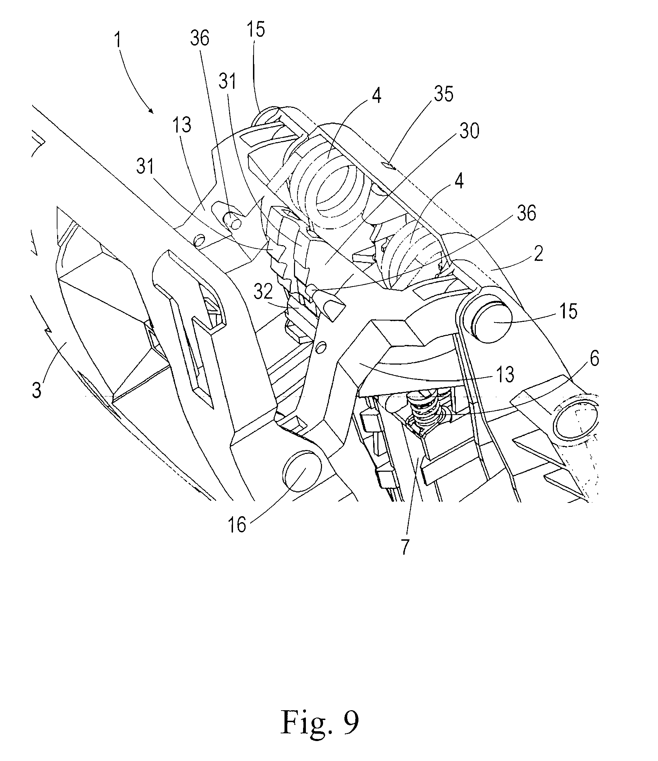

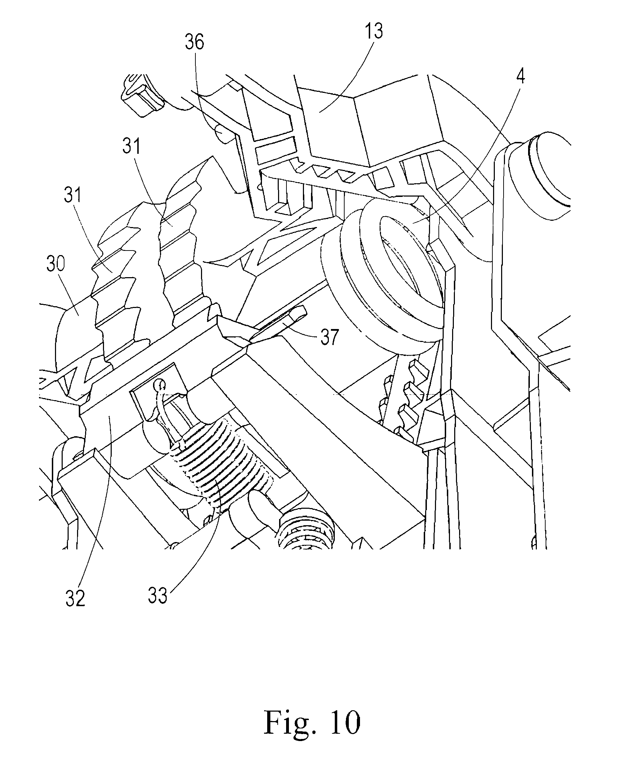

Figures 8 to 12 show a second embodiment of the invention. This second embodiment of the invention comprises all the characteristics of the first embodiment with the difference that the configuration of the upper arms 13 is different and also includes locking means to prevent the moving part 3 from moving back towards the fixed part 2 when it moves from the rest position to the active position. As regards the characteristics shared with the first embodiment, the same numbers have been used as in said first embodiment, and the explanations shall not be repeated as they are exactly the same as those of the first embodiment.

The purpose of the locking means built into the headrest 1 of the second embodiment is to prevent, in the event that the head of the occupant hits the headrest 1 before the moving part 3 reaches the end of its path, said moving part 3 from moving back to its rest position. Said locking means enable the moving part 3 to move in a single direction: from the rest position to the active position.

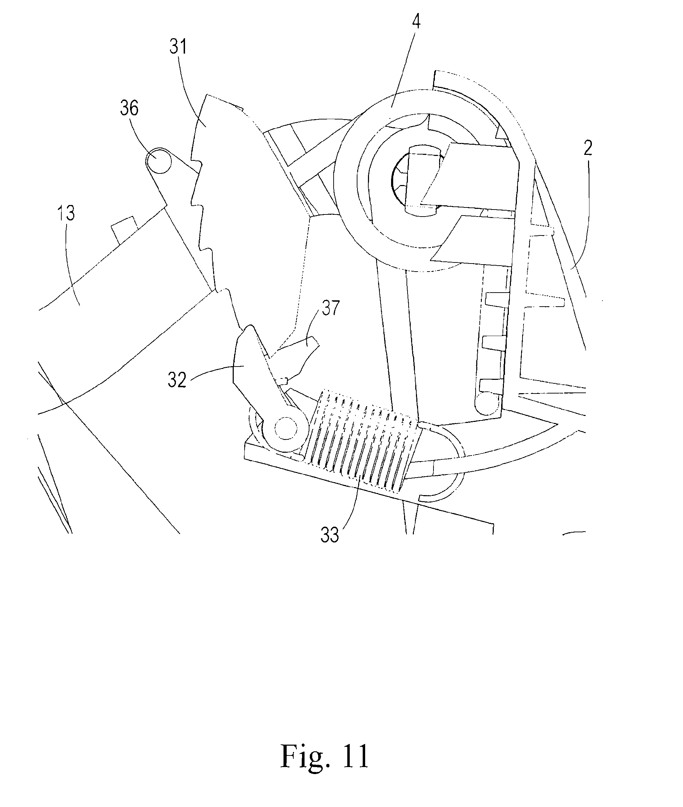

In this second embodiment, the two upper arms 13 are connected to each other by means of an intermediate body 30, thereby forming a single arm connected by both ends to the fixed part 2 and to the moving part 3. The locking means comprise two toothed sections 31 disposed on said intermediate body 30 and which work together with a pawl 32 connected to the fixed part 2, as can be seen in Figure 11, by means of a pawl spring 33. When the moving part 3 moves from the rest position to the active position, the pawl 33 presses, as a result of the action of the spring of the pawl 33, against the toothed sections 31, thereby preventing said moving part 3 from moving back towards the fixed part 2.

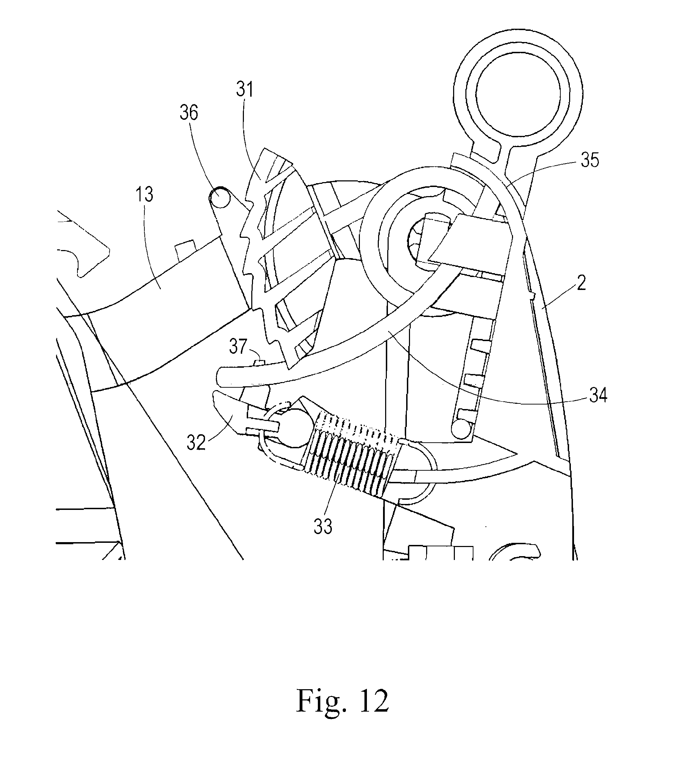

The pawl 33 is tilting and has a first stable position, shown in Figure 11, in which it presses against the toothed sections 31, and a second stable position, shown in Figure 12, in which it is distanced from said toothed sections 31.

In the event that the moving part 3 moves to the active position, in order to reset the headrest 1 it is necessary first of all to stop the pawl 32 pressing on the toothed sections 31. To achieve this, said pawl 32 must be moved from the first stable position to the second stable position. In the headrest 1 of the invention, this can be achieved by inserting a reset rod 34 through a hole 35 disposed in the headrest 1, as shown in Figure 12, and pushing the pawl 32 with said reset rod 34.

When resetting the headrest 1 the pawl 32 must be returned to the first stable position. This is achieved by means of respective studs 36 disposed on the upper arms 13, which push the side wings 37 on the pawl 32 as they return to the rest position.

## Claims

1. Headrest for motor vehicle seats, comprising
a fixed part (2),
a moving part (3) movable in relation to said fixed part (2) from a rest position to an active position,
at least one prestressed spring (4) for moving the moving part (3) in relation to the fixed part (2),
retention means for keeping the moving part (3) in the rest position, said retention means comprising a retention cam (5) disposed pivotally in relation to the fixed part (2), and
release means that act on said retention cam (5) in the event of a collision, thereby releasing the retention means,
**characterised in that**
one of the ends (8) of the retention cam (5) is connected to the fixed part (2), and the other end (9) is coupled to the moving part (3) when the headrest (1) is in the rest position.

2. Headrest according to the preceding claim, wherein the release means are connected to the fixed part (2).

3. Headrest according to the preceding claim, wherein the retention means comprise at least one retention spring (6) that acts on the retention cam (5).

4. Headrest according to the preceding claim, wherein the retention cam (5) comprises
a transverse pivot axle (8) connected to the fixed part (2),
a transverse retention axle (9) that is housed, when the headrest (1) is in the rest position, in a hook (3a) disposed on the moving part (3), and
a cam body that connects said pivot axle (8) and said retention axle (9) together,
the retention spring (6) pressing on said cam body and the release means comprising an electromagnet (7) that comprises a drive axle (7a) connected to the cam body and which, in the event of a collision, causes the retention cam (5) to pivot, thereby counteracting the force exerted by the retention spring (6) and freeing the retention axle (9) from the hook (3a).

5. Headrest according to the preceding claim, wherein the retention axle (9) of the retention cam (5) comprises a rotating cylindrical bushing.

6. Headrest according to any of claims 4 or 5, wherein the cam body comprises two side sections (10) that connect the pivot axle (8) and the retention axle (9) together, said side sections (10) delimiting, along with said pivot axle (8) and said retention axle (9), a housing (11) in which the drive axle (7a) of the electromagnet (7) is inserted, said drive axle (7a) being fixed to the side sections (10) by means of a transverse connection axle (12).

7. Headrest according to the preceding claim, wherein each side section (10) comprises its respective retention spring (9).

8. Headrest according to any of the preceding claims, comprising at least one arm (13) that connects the fixed part (2) and the moving part (3) together, one of the ends (4a) of the prestressed spring (4) being connected to said fixed part (2) and the other end (4b) of said prestressed spring (4) being connected to said arm (13).

9. Headrest according to the preceding claim, comprising two arms (13), said arms (13) being disposed on both sides of the fixed part (2) and the moving part (3), each arm (13) comprising a respective prestressed spring (4).

10. Headrest according to the preceding claim, wherein the two prestressed springs (4) form a single spring with a central section (4c) that is connected to the fixed part (2).

11. Headrest according to any of claims 9 or 10, wherein the two arms (13) are connected to each other by means of an intermediate body (30) that comprises at least one toothed section (31) that works together with a pawl (32) connected to the fixed part (2) by means of a pawl spring (33), thereby preventing the moving part (3) from moving back towards the fixed part (2) when said moving part (3) moves from the rest position to the active position.

12. Headrest according to the preceding claim, wherein the pawl (33) is tilting and has a first stable position in which it presses against the toothed section (31), and a second stable position in which it is distanced from said toothed section (31), said pawl (33) being movable from the first stable position to the second stable position in order to reset the headrest (1) by means of a reset rod (34) that is inserted through a hole (35) disposed in the headrest (1).

13. Headrest according to the preceding claim, wherein the arms (13) comprise at least one stud (36) that returns the pawl (33) to the first stable position during the reset process.

14. Headrest according to any of claims 9 to 13, comprising two additional arms (14) that connect the fixed part (2) and the moving part (3) together, said additional arms (14) being disposed beneath the other arms (13).
